# EUROPÄISCHE PATENTSCHRIFT

(11) **EP 1 462 675 B1**
(45) Veröffentlichungstag und Bekanntmachung des Hinweises auf die Patenterteilung: **02.11.2006**
(21) Anmeldenummer: 04006758.9
(22) Anmeldetag: 20.03.2004
(51) Int. Cl.: F16F 15/139

(54) **Drehschwingungsdämpfer**
Torsional vibration damper
Amortisseur de vibrations de torsion

(30) Priorität: 27.03.2003 DE 10313740
(43) Veröffentlichungstag der Anmeldung: 29.09.2004
(73) Patentinhaber: LuK Lamellen und Kupplungsbau Beteiligungs KG, 77815 Bühl (DE)
(72) Erfinder: Jäckel, Johann, 77830 Bühlertal (DE); Mende, Hartmut, 77815 Bühl (DE)
(74) Vertreter: Duschl, Edgar Johannes

(56) Entgegenhaltungen:
- EP-A- 0 909 906
- DE-A- 19 857 072
- US-A- 5 496 216
- US-A- 5 526 714
- US-A- 6 119 548

## Beschreibung

Die Erfindung betrifft einen Drehschwingungsdämpfer, insbesondere ein geteiltes Schwungrad, mit wenigstens zwei entgegen dem Widerstand von mindestens einer Dämpfungseinrichtung mit Energiespeichern und einer Reibeinrichtung verdrehbaren Schwungmassen, die als primäre und sekundäre Schwungmassen bezeichnet werden.

Beim Einsatz herkömmlicher Drehschwingungsdämpfer, insbesondere geteilter Schwungräder, mit wenigstens zwei, entgegen dem Widerstand von mindestens einer Dämpfungseinrichtung und einer Reibeinrichtung verdrehbaren Schwungmassen, hat sich bei im Rahmen der vorliegenden Erfindung durchgeführten Untersuchungen herausgestellt, dass der Reibwert der Reibeinrichtung im Betrieb, insbesondere beim Einlaufen des Drehschwingungsdämpfers stark variiert. Demzufolge ist auch das durch die Reibeinrichtung erzeugte Reibmoment starken Schwankungen unterworfen, was im Betrieb des Drehschwingungsdämpfers unerwünscht ist. Auch ist eine Anpassung oder Abstufung des erzeugten Reibmomentes bei den herkömmlichen Drehschwingungsdämpfern nicht möglich.

Durch die US 5,526,714 ist ein Drehschwingungsdämpfer mit einer Reibeinrichtung bekannt geworden, die einen Tragring mit einer Innenprofilierung besitzt, wobei in diese Innenprofilierung radiale Ausleger eines einzigen Reibringes, der radial innerhalb der Profilierung angeordnet ist, eingreifen.

Durch die US 6,119,548 A ist bereits ein Drehschwingungsdämpfer mit zwei zueinander verdrehbaren Schwungmassen bekannt geworden, wobei zwischen den Schwungmassen eine Reibeinrichtung vorgesehen ist, die mehrere geschlossene, ringförmige Reibelemente umfasst, wobei einige ringförmige Elemente Auflauframpen besitzen, mittels derer in Abhängigkeit einer Verdrehung zwischen den beiden Schwungmassen das erzeugte Reibmoment verändert werden kann.

Aufgabe der Erfindung ist es daher, einen Drehschwingungsdämpfer, insbesondere ein geteiltes Schwungrad, mit wenigstens zwei, entgegen dem Widerstand von mindestens einer Dämpfungseinrichtung und einer Reibeinrichtung verdrehbaren Schwungmassen zu schaffen, dessen Reibeinrichtung besser an den jeweiligen Bedarf an Reibmoment angepasst werden kann.

Die Aufgabe ist bei einem Drehschwingungsdämpfer, insbesondere einem geteilten Schwungrad, mit wenigstens zwei, entgegen dem Widerstand von mindestens einer Dämpfungseinrichtung mit Energiespeichern und einer Reibeinrichtung verdrehbaren Schwungmassen, die als primäre und sekundäre Schwungmassen bezeichnet werden, dadurch gelöst, dass die Reibeinrichtung mindestens zwei Stützeinrichtungen umfasst, von denen eine mit der primären Schwungmasse verbunden ist und einen kreiszylindermantelförmigen Abschnitt sowie einen radial Schenkel aufweist, wobei die andere Stützeinrichtung axial verschiebbar auf dem axialen Abschnitt aufgenommen ist und einen radialen Schenkel bildet, weiterhin axial zwischen den Schenkeln der beiden Stützeinrichtungen ein Reibring aufgenommen ist, welcher gebildet ist durch einen Tragring und Reibelemente, wobei der Tragring radial innen und radial außen eine Verzahnung aufweist, wobei die Innenverzahnung über den inneren Umfang des Tragringes verteilte Reibelemente aufnimmt und die Außenverzahnung mit einer Verzahnung einer mit der sekundären Schwungmasse verbundenen Kopplungseinrichtung zusammenwirkt, wobei bei einer Relativverdrehung der zwei Schwungmassen zwischen den Reibelementen des Reibringes und den radialen Schenkeln Reibung entsteht. Die Reibelemente weisen einen konstanten Reibwert von vorzugsweise 0,25 bis 0,35 auf und sind mit Hilfe der Trageinrichtung drehfest mit der sekundären Schwungmasse verbunden.

Ein bevorzugtes Ausführungsbeispiel des Drehschwingungsdämpfers ist dadurch gekennzeichnet, dass eine erste Federeinrichtung, insbesondere eine Tellerfedereinrich- tung, mit ihrer einen Seite an der primären Schwungmasse und mit ihrer anderen Seite an der ersten Stützeinrichtung anliegt, die wiederum an den Reibelementen anliegt. Durch die erste Federeinrichtung wird die erste Stützeinrichtung gegen die Reibelemente vorgespannt. Über die Größe der Vorspannkraft kann die Reibungskraft gezielt beeinflusst werden.

Bei dem Tragring kann es sich um ein Blechformteil aus Metall handeln. Die Reibelemente können aus herkömmlichen Reibmaterialien gebildet sein. Bevorzugt werden gestrahlte Reibmaterialien verwendet.

Die Reibelemente können durch eine formschlüssige Verbindung an dem Tragring befestigt sein. In vorteilhafter Weise können Reibelemente in Umfangsrichtung durch die Innenverzahnung des Tragringes fixiert werden.

Ein weiteres bevorzugtes Ausführungsbeispiel des Drehschwingungsdämpfers ist dadurch gekennzeichnet, dass zwischen der Außenverzahnung des Tragrings und der Innenverzahnung der Kopplungseinrichtung ein definiertes Verdrehspiel vorgesehen ist. Durch das Verdrehspiel wird gewährleistet, dass sich der Tragring mit den Reibelementen in einem gewissen Maß relativ zu der Kopplungseinrichtung verdrehen kann.

Ein weiteres bevorzugtes Ausführungsbeispiel des Drehschwingungsdämpfers ist dadurch **gekennzeichnet, dass** die Kopplungseinrichtung ein Kunststoffteil aufweist.

Kopplungseinrichtung hat neben ihrer Kopplungsfunktion noch den Zweck, den Aufnahmeraum für die Dämpfungseinrichtung gegenüber den Reibelementen abzuschirmen. Außerdem dient ein Teil der Kopplungseinrichtung als Reibpartner einer zusätzlichen Reibpaarung neben den Reibelementen.

Ein weiteres bevorzugtes Ausführungsbeispiel des Drehschwingungsdämpfers ist da**durch gekennzeichnet, dass** an der Kopplungseinrichtung eine, im Querschnitt betrachtet, in radialer Richtung verlaufende, insbesondere elastische Lippe vorgesehen ist, die im zusammengebauten Zustand des Drehschwingungsdämpfers zwischen den Reibelementen und der Dämpfungseinrichtung als Dichtung wirksam ist. Vorzugsweise ist die radiale Lippe einstückig mit der Kopplungseinrichtung verbunden. Die Lippe verhindert, dass der im Betrieb an den Reibelementen anfallende Abrieb in den Aufnahmeraum für die Dämpfungseinrichtung gelangt. Der Aufnahmeraum für die Dämpfungseinrichtung ist vorzugsweise mit Schmiermittel gefüllt.

Ein weiteres bevorzugtes Ausführungsbeispiel des Drehschwingungsdämpfers ist dadurch gekennzeichnet, dass die erste Stützeinrichtung als Stützring ausgebildet ist, der, im Querschnitt betrachtet, zwei im Wesentlichen rechtwinklig zueinander angeordnete Schenkel aufweist. Bei der Stützeinrichtung handelt es sich vorzugsweise um ein Blechformteil. Durch die abgewinkelte Gestalt wird der Stützeinrichtung ausreichend Steifigkeit verliehen.

Ein weiteres bevorzugtes Ausführungsbeispiel des Drehschwingungsdämpfers ist dadurch gekennzeichnet, dass der eine Schenkel des Stützrings in radialer und der andere Schenkel in axialer Richtung verläuft. Die Begriffe radial und axial beziehen sich auf die Drehachse des Drehschwingungsdämpfers im zusammengebauten Zustand.

Ein weiteres bevorzugtes Ausführungsbeispiel des Drehschwingungsdämpfers ist dadurch gekennzeichnet, dass zwischen dem in radialer Richtung verlaufenden Schenkel des Stützrings und einer an der Kopplungseinrichtung ausgebildeten Reibfläche eine zweite Federeinrichtung, insbesondere Tellerfedereinrichtung, angeordnet ist. Die zweite Federeinrichtung befindet sich in Reibkontakt mit der an dem Stützring ausgebildeten Reibfläche. Insbesondere in diesem Zusammenhang hat es sich als vorteilhaft erwiesen, die Kopplungseinrichtung aus Kunststoff zu bilden. Dadurch wird eine höhere Reibkonstanz als bei einem Stahl/Stahl-Kontakt erreicht.

Ein weiteres bevorzugtes Ausführungsbeispiel des Drehschwingungsdämpfers ist dadurch gekennzeichnet, dass der in radialer Richtung verlaufende Schenkel des Stützrings an den Reibelementen anliegt. Dadurch wird erreicht, dass dieser Schenkel des Stützrings durch die zweite Federeinrichtung direkt gegen die Reibelemente gedrückt wird.

Ein weiteres bevorzugtes Ausführungsbeispiel des Drehschwingungsdämpfers ist dadurch gekennzeichnet, dass die zweite Stützeinrichtung im Wesentlichen die Gestalt eines Kreiszylindermantels aufweist, von dem sich, im Querschnitt betrachtet, an der einen Stirnseite ein Befestigungsschenkel radial nach innen und an der anderen Stirnseite ein Anlageschenkel radial nach außen erstreckt. Der Befestigungsschenkel dient dazu, die zweite Stützeinrichtung, zum Beispiel mit Hilfe von Schrauben, an der primären Schwungmasse zu befestigen. Der Anlageschenkel bildet eine Anlagefläche für die Reibelemente.

Ein weiteres bevorzugtes Ausführungsbeispiel des Drehschwingungsdämpfers ist dadurch gekennzeichnet, dass die erste und/oder die zweite Stützeinrichtung und/oder der Tragring als Blechformteile ausgebildet sind. Dadurch werden die Herstellkosten dieser Teile gering gehalten.

Ein weiteres bevorzugtes Ausführungsbeispiel des Drehschwingungsdämpfers ist da**durch gekennzeichnet, dass** die Reibelemente unterschiedliche Reibwerte aufweisen.

Bei im Rahmen der vorliegenden Erfindung durchgeführten Untersuchungen hat sich herausgestellt, dass die Reibwerte der verwendeten Reibmaterialien beim Einlaufen stark ansteigen. Durch eine geeignete Materialpaarung oder eine Behandlung der bekannten Reibmaterialien kann erreicht werden, dass der Reibwert beim Einlaufprozess abfällt. Wenn man nun Reibelemente, die steigende Reibwerte aufweisen, mit Reibelementen kombiniert, die fallende Reibwerte aufweisen, kann ein über den Gleitweg annähernd konstanter Gesamtreibwert beziehungsweise ein annähernd konstantes Gesamtreibmoment erzielt werden.
Ein weiteres bevorzugtes Ausführungsbeispiel des Drehschwingungsdämpfers ist dadurch gekennzeichnet, dass die Reibelemente unterschiedliche Winkelausdehnungen aufweisen. Dadurch wird erreicht, dass die verschiedenen Reibelemente zeitlich versetzt in Eingriff kommen. Je nach Paarung von Reibwerten und zeitlich versetztem Zuschalten der Reibelemente können lineare, progressive oder degressive Reibmomentverläufe erreicht werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im einzelnen beschrieben sind. Dabei können die in der Beschreibung und in den Ansprüchen erwähnten Merkmale jeweils einzeln für sich oder in beliebiger Kombination erfindungswesentlich sein. Es zeigen:
- Figur 1: einen Schnitt durch einen erfindungsgemäßen Drehschwingungsdämpfer;
- Figur 2: einen vergrößerten Ausschnitt aus Figur 1;
- Figur 3: ein flanschartiges Beaufschlagungsteil mit daran angebrachten Reibelementen in der Draufsicht gemäß einer ersten Ausführungsform;
- Figur 4: ein flanschartiges Beaufschlagungsteil mit verschiedenen daran angebrachten Reibelementen in der Draufsicht gemäß einer zweiten Ausführungsform und
- Figur 5: ein flanschartiges Beaufschlagungsteil mit verschiedenen daran angebrachten Reibelementen in der Draufsicht gemäß einer dritten Ausführungsform.

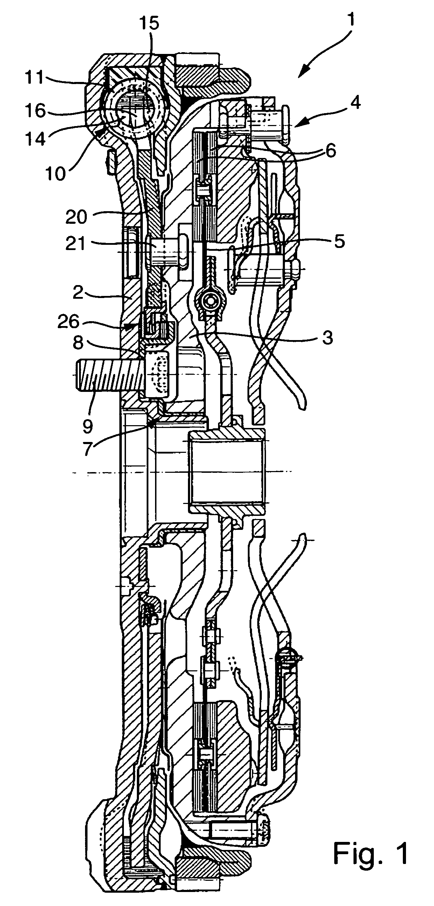

Der in Figur 1 dargestellte Drehschwingungsdämpfer bildet ein geteiltes Schwungrad 1, das eine an einer (nicht gezeigten) Abtriebswelle einer Brennkraftmaschine befestigbare erste oder Primärschwungmasse 2 sowie eine zweite oder Sekundärschwungmasse 3 aufweist. Auf der zweiten Schwungmasse 3 ist eine Reibungskupplung 4 unter Zwischenlegung einer Kupplungsscheibe 5 befestigbar, über die eine ebenfalls (nicht dargestellte) Eingangswelle eines Getriebes zu- und abkuppelbar ist. An der Kupplungsscheibe 5 sind Reibbeläge 6 angebracht, die beim Einkuppeln mit Druck beaufschlagt werden. Die Funktion der Reibungskupplung 4 wird als bekannt vorausgesetzt und daher hier nicht weiter erläutert.

Die Schwungmassen 2 und 3 sind über eine Lagerung 7 zueinander verdrehbar gelagert, die bei dem dargestellten Ausführungsbeispiel radial innerhalb von Bohrungen 8 zur Durchführung von Befestigungsschrauben 9 für die Montage der ersten Schwungmasse 2 an der Abtriebswelle einer Brennkraftmaschine angeordnet ist. Zwischen den beiden Schwungmassen 2 und 3 ist eine Dämpfungseinrichtung 10 wirksam, die Energiespeicher umfasst, von denen zumindest einer durch eine Schraubendruckfeder 11 gebildet ist.

Die beiden Schwungmassen 2 und 3 besitzen Beaufschlagungsbereiche 14, 15 beziehungsweise 16 für die Energiespeicher 11. Bei dem dargestellten Ausführungsbeispiel sind die Beaufschlagungsbereiche 14, 15 durch in die erste Schwungmasse 2 bildende Blechteile eingebrachte Anprägungen gebildet. Die axial zwischen den Beaufschlagungsbereichen 14, 15 vorgesehenen Beaufschlagungsbereiche 16 sind durch zumindest ein mit der Sekundärschwungmasse 3, beispielsweise über Niete 21, verbundenes flanschartiges Beaufschlagungsteil 20 gebildet. Dieses Bauteil 20 dient als Drehmomentübertragungselement zwischen den Energiespeichern 7 und der Schwungmasse 3. Die Beaufschlagungsbereiche 16 sind durch am Außenumfang des flanschartigen Beaufschlagungsmittels 20 vorgesehene radiale Arme beziehungsweise Ausleger 16 gebildet.

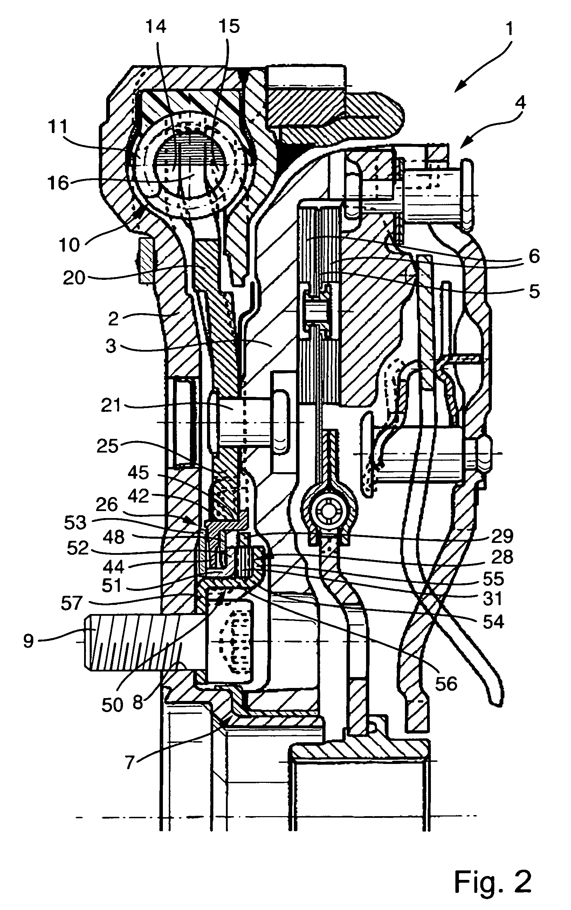

Wie in Figur 2 vergrößert dargestellt ist, weist das flanschartige Beaufschlagungsteil 20 einen radial innenliegenden Bereich 25 auf, in dessen Nähe eine Reibeinrichtung 26 vorgesehen ist. Die Reibeinrichtung 26 umfasst einen Reibring 28 mit einer Trageinrichtung oder einem Tragring 29, an dem Reibelemente 31 befestigt sind.

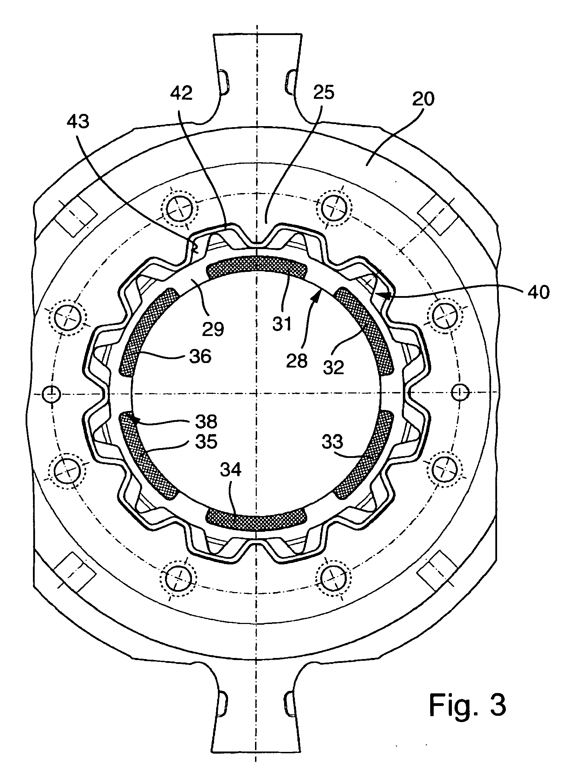

In Figur 3 sieht man, dass sechs Reibelemente 31, 32, 33, 34, 35, 36 gleichmäßig über den inneren Umfang des Tragrings 29 verteilt angeordnet sind. Am inneren Umfang des Tragrings 29 ist eine Innenverzahnung 38 ausgebildet, die zur formschlüssigen Aufnahme der Reibelemente 31 bis 36 dient.

Radial außen ist der Tragring 29 mit einer Außenverzahnung 40 ausgestattet, die mit einer Innenverzahnung 43 einer Kopplungseinrichtung 42 zusammenwirkt. Zwischen den Zähnen der Außenverzahnung 40 des Tragrings 29 und den Zähnen der Innenverzahnung 43 der Kopplungseinrichtung 42 ist soviel Spiel vorgesehen, dass sich der Tragring 29 relativ zu der Kopplungseinrichtung 42 verdrehen kann. Die Kopplungseinrichtung 42 ist drehfest, insbesondere formschlüssig mit dem flanschartigen Beaufschlagungsteil 20 verbunden.

In Figur 2 sieht man, dass an der Kopplungseinrichtung 42 eine Lippe 44 ausgebildet ist, die sich von dem radial innenliegenden Randbereich 25 des flanschartigen Beaufschlagungsteils 20 radial nach innen erstreckt. Auf der der primären Schwungmasse 2 abgewandten Seite der radialen Lippe 44 ist eine Reibfläche 45 für eine Federeinrichtung 48 vorgesehen, die sich, im zusammengebauten Zustand des Drehschwingungsdämpfers, an der Kopplungseinrichtung 42 in Anlage befindet.

In der Nähe der Federeinrichtung 48 ist eine erste Stützeinrichtung 50 angeordnet, die einen axialen Schenkel 51 und einen radialen Schenkel 52 aufweist, auf dessen einer Seite sich die Federeinrichtung 48 abstützt. Die andere Seite des radialen Schenkels 52 der ersten Stützeinrichtung 50 liegt an den Reibelementen 31 des Reibrings 28 an. Die erste Stützeinrichtung 50 ist relativ zu einer zweiten Stützeinrichtung 54 axial verschiebbar, aber insbesondere drehfest angeordnet. Die zweite Stützeinrichtung 54 umfasst, im Querschnitt betrachtet, einen in radialer Richtung nach außen gerichteten Schenkel 55, an dem sich die Reibbeläge 31 in Anlage befinden. Der radial äußere Schenkel 55 geht von einer Stirnseite eines axialen Abschnitts 56 aus, der im Wesentlichen die Gestalt eines Kreiszylindermantels aufweist. Von der entgegengesetzten Stirnseite des axialen Abschnitts 56 erstreckt sich radial nach innen ein Schenkel 57, mit Hilfe dessen die zweite Stützeinrichtung 54 mit Hilfe der Befestigungsschraube 9 an der primären Schwungmasse 2 befestigt ist.

Durch die erfindungsgemäße Reibeinrichtung 26 kann ein möglichst konstantes Reibmoment übertragen werden. Die radiale Lippe 44 verhindert, dass der Abrieb, der sowohl durch Reibung zwischen der Federeinrichtung 48 und der Anlagefläche 45 der Kopplungseinrichtung 42 als auch durch Reibung zwischen den Reibelementen 31 bis 36 und dem radialen Schenkel 52 der ersten Stützeinrichtung 50 und dem radialen Schenkel 55 der zweiten Stützeinrichtung 54 entstehen kann, in den Aufnahmeraum für die Schraubendruckfeder 11 gelangt. Die erste Federeinrichtung 53, die als Tellerfeder ausgebildet ist, und die verdrehgesicherte, winklige Stützscheibe 50 belasten den Reibring 28, der aus dem Trägerblech 29 mit Außen- und Innenverzahnung und Reibstücken 31 bis 36 aus Bremsscheibenmaterial gebildet wird. Die Reibstücke 31 bis 36 weisen einen sehr konstanten Reibwert von circa 0,25 bis 0,35 auf und sind in der Innenverzahnung 38 des Trägerblechs 29 verdrehfest gehalten. Die Außenverzahnung 40 greift spielbehaftet, unter Ausbildung eines Freiwinkels, in das Kunststoffteil 42 ein. Dieses wiederum ist mittels einer Außenverzahnung verdrehfest in dem Flansch 20 gehalten. Zwischen dem Kunststoffteil 42 und dem Stützblech 50 ist die Tellerfeder 48 angeordnet, deren Reibkontakt am Kunststoff erfolgt. Dadurch wird eine höhere Reibkonstanz als bei Stahl/Stahl-Kontakt erreicht.

Gleichzeitig dient die Tellerfeder 48 zur Erzeugung der in Richtung Motor wirkenden Lagervorlast. Zusätzliche Stützfedem können damit entfallen. Durch Bohrungen im Sekundärschwungrad 3 eindringender Schmutz wird durch das geschlossen ausgeführte Stützblech 50 und das Kunststoffteil 42 ebenfalls von dem Aufnahmeraum für die Schraubendruckfeder 11 ferngehalten.

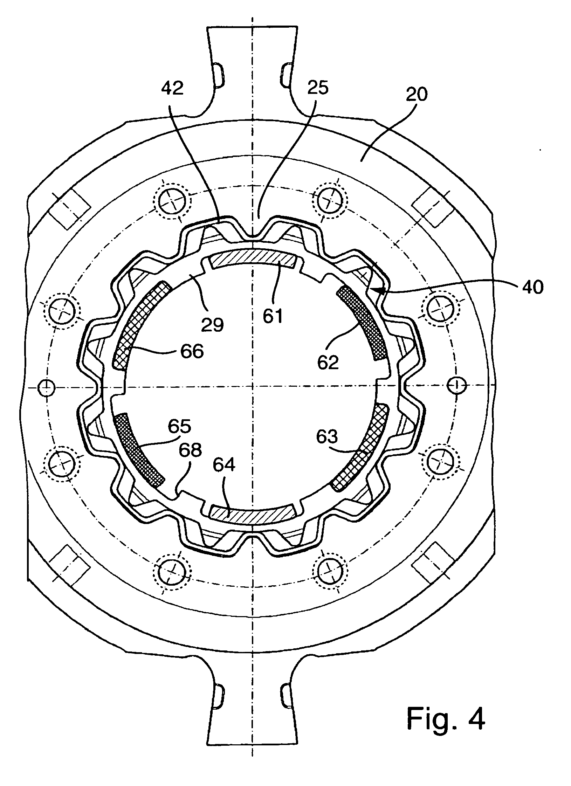

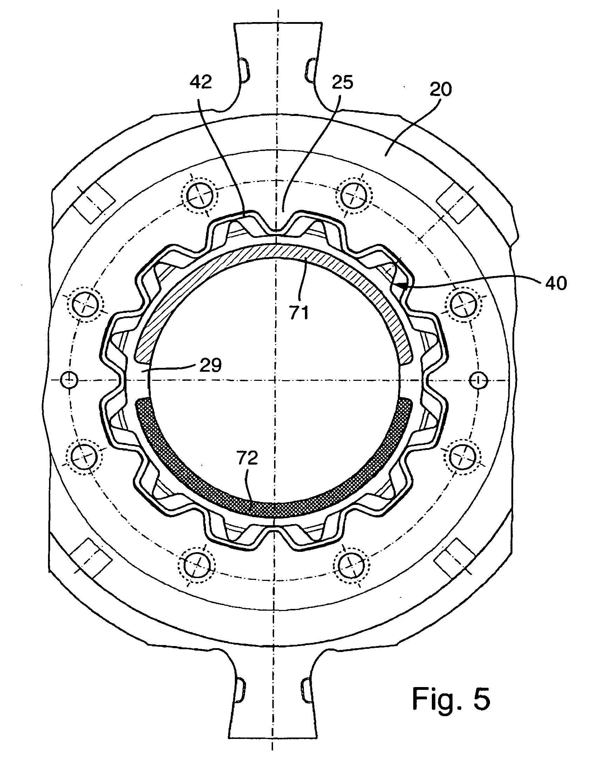

In den Figuren 4 und 5 ist genauso ein flanschartiges Beaufschlagungsteil 20 wie in Figur 3 dargestellt. Um Wiederholungen zu vermeiden wird im Folgenden nur auf die Unterschiede zwischen den einzelnen Ausführungsformen eingegangen.

Bei der in Figur 4 dargestellten Ausführungsform sind an dem Tragring 29 sechs Reibelemente 61, 62, 63, 64, 65, 66 angebracht, die unterschiedliche Reibwerte aufweisen. Jeweils zwei diametral gegenüberliegend angeordnete Reibelemente 61, 64; 62, 65; 63, 66 bilden ein Paar mit gleichem Reibwert. Darüber hinaus sind die Abmessungen der verschiedenen Paare Reibelemente unterschiedlich. Durch die paarweise gestufte Ausbildung erfolgt der Eingriff von Reibelementen mit unterschiedlichen Reibwerten zeitlich versetzt. Der jeweilig anliegende Gesamtreib-wert bestimmt das aktuell vorhandene Reibmoment. Je nach Paarung von Reibwerten und zeitlich versetztem Zuschalten der Reibelemente können lineare, progressive und degressive Reibmomentverläufe erreicht werden.

In Figur 5 sind in den Tragring 29 zwei Reibelemente 71 und 72 mit unterschiedlichen Reibwerten eingesetzt. Die beiden Reibelemente 71 und 72 haben jeweils eine Winkelausdehnung von fast 180°. Das Reibelement 71 weist einen Reibwert auf, der beim Einlaufen stark ansteigt. Das Reibelement 72 weist demgegenüber einen Reibwert auf, der beim Einlaufen stark abfällt. Durch die Kombination der beiden Reibelemente 71 und 72 kann ein über den Gleitweg annähemd konstanter Gesamtreibwert beziehungsweise ein annähemd konstantes Gesamtreibmoment erzielt werden.

### Bezugszeichenliste

| Pos. | Benennung | Pos. | Benennung |
|---|---|---|---|
| 1 | geteiltes Schwungrad | 41 | |
| 2 | primäre Schwungmasse | 42 | Kopplungseinrichtung |
| 3 | Sekundäre Schwungmasse | 43 | Innenverzahnung |
| 4 | Reibungskupplung | 44 | radiale Lippe |
| 5 | Kupplungsscheibe | 45 | Reibfläche |
| 6 | Reibbeläge | 46 | |
| 7 | Lagerung | 47 | |
| 8 | Bohrungen | 48 | Federeinrichtung (zweite) |
| 9 | Befestigungsschrauben | 49 | |
| 10 | Dämpfungseinrichtung | 50 | erste Stützeinrichtung |
| 11 | Schraubendruckfeder | 51 | Schenkel axial |
| 12 | | 52 | Schenkel radial |
| 13 | | 53 | Federeinrichtung (erste) |
| 14 | Beaufschlagungsbereich | 54 | zweite Stützeinrichtung |
| 15 | Beaufschlagungsbereich | 55 | Radialer Außenschenkel |
| 16 | Beaufschlagungsbereich | 56 | axialer Abschnitt |
| 17 | | 57 | Radialer Innenschenkel |
| 18 | | 58 | |
| 19 | | 59 | |
| 20 | flanschartiges Beaufschlagungsteil | 60 | |
| 21 | Niete | 61 | Reibelement |
| 22 | | 62 | Reibelement |
| 23 | | 63 | Reibelement |
| 24 | | 64 | Reibelement |
| 25 | Radial innenliegender Randbereich von 20 | 65 | Reibelement |
| 26 | Reibeinrichtung | 66 | Reibelement |
| 27 | | 67 | |
| 28 | Reibring | 68 | Innenverzahnung |
| 29 | Trageinrichtung, Tragring | 69 | |
| 30 | | 70 | |
| 31 | Reibelemente | 71 | Reibelement |
| 32 | Reibelemente | 72 | Reibelement |
| 33 | Reibelemente | | |
| 34 | Reibelemente | | |
| 35 | Reibelemente | | |
| 36 | Reibelemente | | |
| 37 | | | |
| 38 | Innenverzahnung des Tragrings 29 | | |
| 39 | | | |
| 40 | Außenverzahnung | | |

## Patentansprüche

1. Drehschwingungsdämpfer, insbesondere geteiltes Schwungrad (1), mit wenigstens zwei entgegen dem Widerstand von zumindest einer Dämpfungseinrichtung (10), die Energiespeicher (11) umfasst, und eine Reibeinrichtung (26) verdrehbaren Schwungmassen (2, 3), die als primäre und sekundäre Schwungmassen bezeichnet werden, wobei die Reibeinrichtung (26) mindestens zwei Stützeinrichtungen (50, 54) umfasst, von denen eine (54) mit der primären Schwungmasse (2) verbunden ist und einen kreiszylindermantelförmigen axialen Abschnitt (56) sowie einen radialen Schenkel (55) aufweist, wobei die andere Stützeinrichtung (50) axial verschiebbar auf dem axialen Abschnitt (56) auf dem axialen Abschnitt (56) aufgenommen ist und einen radialen Schenkel (52) bildet, weiterhin axial zwischen den Schenkeln (52, 55) der beiden Stützeinrichtungen (50, 54) ein Reibring (28) aufgenommen ist, welcher gebildet ist durch einen Tragring (29) und Reibelemente (31), wobei der Tragring (29) radial innen und radial außen eine Verzahnung (38, 68; 40) aufweist, wobei die Innenverzahnung (38, 68) über den inneren Umfang des Tragringes (29) verteilte Reibelemente (31 bis 36; 61 bis 66; 71, 72) aufnimmt und die Außenverzahnung (40) mit einer Verzahnung einer mit der sekundären Schwungmasse (3) verbundenen Kopplungseinrichtung (42) zusammenwirkt, wobei bei einer Relativverdrehung der zwei Schwungmassen zwischen den Reibelementen des Reibringes (28) und den radialen Schenkeln (52, 55) Reibung entsteht.

2. Drehschwingungsdämpfer nach Anspruch 1, **dadurch gekennzeichnet, dass** eine erste Federeinrichtung (53), insbesondere eine Tellerfedereinrichtung, mit ihrer einen Seite an der primären Schwungmasse (2) und mit ihrer anderen Seite an der ersten Stützeinrichtung (50) anliegt, die wiederum an den Reibelementen (31 bis 36; 61 bis 66; 71, 72) anliegt.

3. Drehschwingungsdämpfer nach Anspruch 1, **dadurch gekennzeichnet, dass** die Innenverzahnung (38; 68) des Tragringes (29) zur Fixierung der Reibelemente in Umfangsrichtung dient.

4. Drehschwingungsdämpfer nach einem der Ansprüche 1 bis 3, **dadurch gekennzeichnet, dass** zwischen der Außenwandung (40) des Tragrings (29) und der Verzahnung (43) der Kopplungseinrichtung (42) ein definiertes Verdrehspiel vorgesehen ist.

5. Drehschwingungsdämpfer nach einem der Ansprüche 1 bis 4, **dadurch gekennzeichnet, dass** die Kopplungseinrichtung (42) aus Kunststoff gebildet ist.

6. Drehschwingungsdämpfer nach einem der Ansprüche 2 bis 5, **dadurch gekennzeichnet, dass** an der Kopplungseinrichtung (42) eine, im Querschnitt betrachtet, in radialer Richtung verlaufende Lippe (44) vorgesehen ist, die im zusammengebauten Zustand des Drehschwingungsdämpfers axial zwischen den Reibelementen (31 bis 36; 61 bis 66; 71, 72) und der Tellerfedereinrichtung (53) angeordnet ist.

7. Drehschwingungsdämpfer nach einem der vorhergehenden Ansprüche, **dadurch gekennzeichnet, dass** die erste Stützeinrichtung (50) als Stützring ausgebildet ist, der, im Querschnitt betrachtet, zwei im Wesentlichen rechtwinklig zueinander angeordnete Schenkel (51, 52) aufweist.

8. Drehschwingungsdämpfer nach Anspruch 7, **dadurch gekennzeichnet, dass** der eine Schenkel (52) des Stützrings (50) in radialer und der andere Schenkel (51) in axialer Richtung verläuft.

9. Drehschwingungsdämpfer nach einem der Ansprüche 6 bis 8, **dadurch gekennzeichnet, dass** axial zwischen dem in radialer Richtung verlaufenden Schenkel (52) des Stützrings (50) und der in radialer Richtung verlaufenden Lippe (44) der Kopplungseinrichtung (42) eine zweite Federeinrichtung (48), insbesondere Tellerfedereinrichtung, angeordnet ist.

10. Drehschwingungsdämpfer nach Anspruch 8 oder 9, **dadurch gekennzeichnet, dass** der in radialer Richtung verlaufende Schenkel (52) des Stützrings (50) an den Reibelementen (31 bis 36; 61 bis 66; 71, 72) anliegt.

11. Drehschwingungsdämpfer nach einem der vorhergehenden Ansprüche, **dadurch gekennzeichnet, dass** die Reibelemente (31 bis 36; 61 bis 66; 71, 72) am radialen Schenkel (55) der zweiten Stützeinrichtung (54) anliegen, wobei diese an der primären Schwungmasse (2) befestigt ist.

12. Drehschwingungsdämpfer nach Anspruch 11, **dadurch gekennzeichnet, dass** die zweite Stützeinrichtung (54) im Wesentlichen die Gestalt eines Kreiszylindermantels (56) aufweist, von dem sich, im Querschnitt betrachtet, an der einen Stirnseite ein Befestigungsschenkel (57) radial innen und an der anderen Stirnseite ein Anlageschenkel (55) radial nach außen erstreckt.

13. Drehschwingungsdämpfer nach einem der vorhergehenden Ansprüche, **dadurch gekennzeichnet, dass** die erste und/oder die zweite Stützeinrichtung und/oder der Tragring als Blechformteile ausgebildet sind.

14. Drehschwingungsdämpfer nach einem der vorhergehenden Ansprüche, **dadurch gekennzeichnet, dass** die Reibelemente unterschiedliche Reibwerte aufweisen.

15. Drehschwingungsdämpfer nach einem der vorhergehenden Ansprüche, **dadurch gekennzeichnet, dass** die Reibelemente unterschiedliche Winkelausdehnungen aufweisen.

## Claims

1. A torsional vibration damper, in particular a divided flywheel (1), having at least two centrifugal masses (2, 3) that are rotatable against the resistance of at least one damping device (10) that includes energy storage devices (11) and a friction device (26), which centrifugal masses are designated as primary and secondary centrifugal masses, where the friction device (26) includes at least two support devices (50, 54), one of which (54) is connected to the primary centrifugal mass (2) and has an axial section (56) in the form of a circular cylinder and a radial arm (55), the other support device (50) being received on the axial section (56) so that it is axially movable and forms a radial arm (52), furthermore there is a friction ring (28) included axially between the arms (52, 55) of the two support devices (50, 54), which is formed by a carrier ring (29) and friction elements (31), where the carrier ring (29) has gearing (38, 68; 40) radially inside and radially outside, where the inside gearing (38, 68) receives friction elements (31 to 36; 61 to 66; 71, 72) distributed around the inside circumference of the carrier ring (29) and the outside gearing (40) interacts with gearing of a coupling device (42) that is connected to the secondary centrifugal mass (3), where friction arises when there is relative rotation of the two centrifugal masses between the friction elements of the friction ring (28) and the radial arms (52, 55).

2. A torsional vibration damper according to Claim 1, **characterized in that** a first spring device (53), in particular a diaphragm spring device, has one of its sides in contact with the primary centrifugal mass (2) and its other side in contact with the first support device (50), which in turn is in contact with the friction elements (31 to 36; 61 to 66; 71, 72).

3. A torsional vibration damper according to Claim 1, **characterized in that** the inside gearing (38; 68) of the carrier ring (29) serves to fix the friction elements in the circumferential direction.

4. A torsional vibration damper according to one of Claims 1 through 3, **characterized in that** a defined rotation play is provided between the outside wall (40) of the carrier ring (29) and the gearing (43) of the coupling device (42).

5. A torsional vibration damper according to one of Claims 1 through 4, **characterized in that** the coupling device (42) is made of plastic.

6. A torsional vibration damper according to one of Claims 2 through 5, **characterized in that** on the coupling device (42) a lip (44) is provided which runs in the radial direction, regarded in cross section, which is positioned axially between the friction elements (31 to 36; 61 to 66; 71, 72) and the diaphragm spring device (53) when the torsional vibration damper is in the assembled state.

7. A torsional vibration damper according to one of the preceding claims, **characterized in that** the first support device (50) is formed as a support ring, which, regarded in cross section, has two arms (51, 52) that are essentially at right angles to each other.

8. A torsional vibration damper according to Claim 7, **characterized in that** the one arm (52) of the support ring (50) runs in the radial direction and the other arm (51) runs in the axial direction.

9. A torsional vibration damper according to one of Claims 6 through 8, **characterized in that** a second spring device (48), in particular a diaphragm spring device, is positioned axially between the arm (52) of the support ring (50) that runs in the radial direction and the lip (44) of the coupling device (42) that runs in the radial direction.

10. A torsional vibration damper according to Claim 8 or 9, **characterized in that** the arm (52) of the support ring (50) that runs in the radial direction is in contact with the friction elements (31 to 36; 61 to 66; 71, 72).

11. A torsional vibration damper according to one of the preceding claims, **characterized in that** the friction elements (31 to 36; 61 to 66; 71, 72) are in contact with the radial arm (55) of the second support device (54), the latter being attached to the primary centrifugal mass (2).

12. A torsional vibration damper according to Claim 11, **characterized in that** the second support device (54) has essentially the shape of a cylindrical sleeve (56), from which, regarded in cross section, an attachment arm (57) extends radially inwardly on the one face and a contact arm (55) extends radially outwardly on the other face.

13. A torsional vibration damper according to one of the preceding claims, **characterized in that** the first and/or the second support device and/or the carrier ring are designed as formed sheet metal parts.

14. A torsional vibration damper according to one of the preceding claims, **characterized in that** the friction elements have different coefficients of friction.

15. A torsional vibration damper according to one of the preceding claims, **characterized in that** the friction elements have different angular extensions.

## Revendications

1. Amortisseur de vibrations de rotation, en particulier volant (1) divisé, avec au moins deux masses d'inertie (2, 3) pouvant tourner dans le sens contraire à la résistance d'au moins un dispositif d'amortissement (10), qui comprend des accumulateurs d'énergie (11), et un dispositif de frottement (26), lesquelles masses sont désignées par masses d'inertie primaires et masses d'inertie secondaires, le dispositif de frottement (26) comprenant au moins deux dispositifs de soutien (50, 54), dont l'un (54) est relié à la masse d'inertie (2) primaire et présente une partie (56) axiale en forme d'enveloppe de cylindre circulaire et une branche (55) radiale, l'autre dispositif de soutien (50) étant réceptionné sur la partie (56) axiale de façon à pouvoir coulisser axialement sur la partie (56) axiale et formant une branche (52) radiale, une bague de frottement (28) étant réceptionnée également axialement entre les branches (52 et 55) des deux dispositifs de soutien (50, 54), laquelle bague est formée par une bague support (29) et des éléments de frottement (31), la bague support (29) présentant une denture (38, 68 ; 40) radialement à l'intérieur et radialement à l'extérieur, la denture intérieure (38, 68) recevant des éléments de frottement (31 à 36 ; 61 à 66 ; 71, 72) répartis sur le pourtour intérieur de la bague support (29) et la denture extérieure (40) coopérant avec une denture d'un dispositif d'accouplement (42) relié à la masse d'inertie (3) secondaire, du frottement se formant lors d'une rotation relative des deux masses d'inertie entre les éléments de frottement de la bague de frottement (28) et les branches (52, 55) radiales.

2. Amortisseur de vibrations de rotation selon la revendication 1, **caractérisé en ce qu'**un premier dispositif de ressort (53), en particulier un dispositif de ressort à disques, s'appuie par l'un de ses côtés sur la masse d'inertie (2) primaire et par son autre côté sur le premier dispositif de soutien (50), qui s'appuie à son tour sur les éléments de frottement (31 à 36 ; 61 à 66 ; 71, 72).

3. Amortisseur de vibrations de rotation selon la revendication 1, **caractérisé en ce que** la denture intérieure (38 ; 68) de la bague support (29) sert à la fixation des éléments de frottement dans le sens périphérique.

4. Amortisseur de vibrations de rotation selon l'une quelconque des revendications 1 à 3, **caractérisé en ce qu'**un jeu de rotation défini est prévu entre la paroi externe (40) de la bague support (29) et la denture (43) du dispositif d'accouplement (42).

5. Amortisseur de vibrations de rotation selon l'une quelconque des revendications 1 à 4, **caractérisé en ce que** le dispositif d'accouplement (42) est formé en plastique.

6. Amortisseur de vibrations de rotation selon l'une quelconque des revendications 2 à 5, **caractérisé en ce que** sur le dispositif d'accouplement (42) est prévue une lèvre (44) agencée dans le sens radial, vue en coupe transversale, qui est disposée radialement entre les éléments de frottement (31 à 36 ; 61 à 66 ; 71, 72) et le dispositif à ressort à disques (53) lorsque l'amortisseur de vibrations de rotation est assemblé.

7. Amortisseur de vibrations de rotation selon l'une quelconque des revendications précédentes, **caractérisé en ce que** le premier dispositif de soutien (50) est conçu comme une bague support, qui présente, vu en coupe transversale, deux branches (51, 52) disposées sensiblement à angle droit l'une par rapport à l'autre.

8. Amortisseur de vibrations de rotation selon la revendication 7, **caractérisé en ce que** l'une des branches (52) de la bague support (50) est agencée dans le sens radial et l'autre branche (51) dans le sens axial.

9. Amortisseur de vibrations de rotation selon l'une quelconque des revendications 6 à 8, **caractérisé en ce qu'**un second dispositif à ressort (38), en particulier un dispositif à ressort à disques, est disposé axialement entre la branche (52), agencée dans le sens radial, de la bague support (50) et la lèvre (44) agencée dans la direction radiale, du dispositif d'accouplement (42).

10. Amortisseur de vibrations de rotation selon la revendication 8 ou 9, **caractérisé en ce que** la branche (52) agencée dans le sens radial, de la bague support (50) s'appuie sur les éléments de frottement (31 à 36 ; 61 à 66 ; 71, 72).

11. Amortisseur de vibrations de rotation selon l'une quelconque des revendications précédentes, **caractérisé en ce que** les éléments de frottement (31 à 36 ; 61 à 66 ; 71, 72) s'appuient sur la branche (55) radiale du second dispositif de soutien (54), celui-ci étant fixé sur la masse d'inertie (2) primaire.

12. Amortisseur de vibrations de rotation selon la revendication 11, **caractérisé en ce que** le second dispositif de soutien (54) présente sensiblement la forme d'une enveloppe de cylindre circulaire (56), à partir de laquelle, vue en section, une branche de fixation radiale (57) s'étend radialement à l'intérieur sur un côté avant et une branche d'appui (55) s'étend radialement vers l'extérieur sur l'autre côté avant.

13. Amortisseur de vibrations de rotation selon l'une quelconque des revendications précédentes, **caractérisé en ce que** le premier et/ou le second dispositifs de soutien et/ou la bague support sont réalisés sous la forme de pièces moulées en tôle.

14. Amortisseur de vibrations de rotation selon l'une quelconque des revendications précédentes, **caractérisé en ce que** les éléments de frottement présentent différents coefficients de frottement.

15. Amortisseur de vibrations de rotation selon l'une quelconque des revendications précédentes, **caractérisé en ce que** les éléments de frottement présentent différentes extensions angulaires.
